# EUROPEAN PATENT APPLICATION

(11) **EP 4 622 379 A1**
(43) Date of publication of application: **24.09.2025**
(21) Application number: 25150044.3
(22) Date of filing: 02.01.2025
(51) Int. Cl.: H04W 72/541, H04W 36/20, H04W 84/12, H04W 36/30

(54) **DEVICE AND INTERFERENCE-AWARE ACCESS POINT OR CHANNEL OF OPERATION SELECTION**

(30) Priority: 22.03.2024 US 202418613186
(71) Applicant: INTEL Corporation, Santa Clara, CA 95054 (US)
(72) Inventor: AZIZI, Shahrnaz, Cupertino, 95014 (US); ZUR, Liron, Redmond (US); RESHEF, Ehud, 3608249 Kiryat Tivon (IL); ROTHMANN, Amihud, Haifa (IL); FOERSTER, Jeffrey, Portland, 97229 (US); KOJOKARO, Chen, 20692 Yoqneam Illit (IL)
(74) Representative: Viering, Jentschura & Partner mbB Patent- und Rechtsanwälte

(57) **Abstract**

A device may include a modem and a processor. In a first configuration, the processor may be configured to cause the modem to establish a wireless connection to a first wireless access point; receive a wireless signal during a non-transmission period of the first wireless access point; determine a wireless signal indicator based on the wireless signal; determine an interference parameter; and select a second wireless access point based on the wireless signal indicator and the interference parameter. In a second configuration, the processor may be configured to cause the modem to connect to a wireless access point; receive a first wireless signal during a non-transmission period of the wireless access point; determine an interference parameter based on the wireless signal; and send a second wireless signal representing the interference parameter to the wireless access point.

## Description

### Technical Field

Various aspects of this disclosure generally relate to avoidance of platform generated radio interference, whether through Access Point (AP) selection or channel negotiation.

### Background

Platform interference or radio frequency interference (RFI) is used herein to describe electromagnetic signals that are generated as part of a device platform (e.g. at a memory or a memory platform, a Bluetooth device, or any other component of the device platform) that are received at a radio receiver. Although various strategies exist for managing or mitigating such interference, platform noise continues to be a problem that negatively affects Wi-Fi and cellular performance. In general, platform noise may be more significant in smaller form factor devices (e.g. small PCs, 2-in-1 devices, etc.) because of the close proximity of the antenna to the platform noise sources (e.g. memory, transmitter, etc). The noise tends to degrade the wireless receiver sensitivity and to negatively affect the downlink throughput and the Wi-Fi AP link adaptation. These, in turn, tend to diminish the overall user experience.

Moreover, the implementation of Institute of Electrical and Electronics Engineers (IEEE) 802.11be (Wi-Fi 7) or even IEEE 802.11bn (Wi-Fi 8), which will each be capable of operation in the 6-7GHz band, and in conjunction with increasing memory performance, raises new issues relative to Double Data Rate (DDR) and Low-Power Double Data Rate (LPDDR) memories, since such memories generate noise in the 6-7 GHz band in addition to 2.4GHz and 5GHz band and thus interfere with Wi-Fi. In addition, the Wi-Fi 7 standard will permit multi-link operation (MLO) in different bands, which in turn renders noise mitigation in Wi-Fi channels even more challenging.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts the impact of DDR noise on Wi-Fi channels;
FIG. 2 depicts common AP channels that are selected in Wi-Fi;
FIG. 3 depicts the impact of interference on throughput during periods of memory-intense workloads;
FIG. 4 depicts RF Noise measured between packets to detect Non-Wi-Fi interference;
FIG. 5 depicts aggregated knowledge within the context of a Cloud/the Wi-Fi IE;
FIG. 6 depicts an exemplary effective SNR for use in the Advanced AP Selection Algorithm;
FIG. 7 depicts a client device for AP selection; and
FIG. 8 depicts a method of access point (AP) selection.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. Wherever it is indicated that a processor is configured to send a signal, this may include sending a signal to a modem for wireless transmission to an external device. Alternatively or additionally, the processor may be a processor of the modem, in which manner the processor's sending of the signal may be functionally linked to or indistinguishable from the modem's sending of the signal.

At various times throughout, the principles and methods herein are described as being used to determine a frequency. Whenever a singular frequency is described herein as being determined, it is expressly noted that the device, software, processor, or method may determine, or be used to determine a plurality of frequencies, such as a range of frequencies (e.g. having a center frequency), and/or to determine a channel corresponding to a detected frequency. This may be performed according to any known method, including but not limited to, performing a transformation from the time domain to the frequency domain and analyzing the resulting frequency components of a received signal.

The term "platform" is used throughout to refer to the combined components of the underlying device (e.g. the device having a wireless link to the AP, such as a user device or client device). In this manner, platform noise may be understood as noise at the user device that is generated by any one or more components of the platform. This may be, for example, noise generated by a memory of the platform, noise from a transmitter of the platform (e.g. a Bluetooth transmitter), noise from an AC source, etc.

This disclosure proposes a device, a method, and computer readable instructions for determining noise within a Wi-Fi channel and considering this noise when choosing an AP among multiple available APs or in selecting a channel for Wi-Fi transmission and/or reception. As will be described in greater detail, the device, method, or computer readable instructions may also make use of, or consider, predetermined information regarding the noise generated at an underlying device during various workloads (e.g., types or magnitudes of computations demands). In addition, such information can be shared via an application-level exchange with an AP vender to configure APs or to assist APs in their own channel selection algorithms, such as to use a channel based on users' interference characteristics by utilizing per platform-specific workload/interference. That is, a device may utilize accumulated info from multiple active devices to identify a preferred AP or a preferred channel for the AP. The technology may take at least any of the following into consideration: device power consumption, power source, the AP's load (e.g., if the AP has multiple stations associated to it and there is significant traffic in a channel, the device may decide that this AP is a poor choice because the network is quote loaded), workloads on the platform, or internal platform interference coming from high-speed memory, IOs or other components of the platform whose operation, the clock, or harmonics of said operation or clock frequencies fall within Wi-Fi (or other wireless technology) channel.

As indicated above, various components of a computing platform may introduce noise, which may negatively affect Wi-Fi reception. Generally speaking, such noise/interference can be mitigated in two ways:

The first way is at the device, in which the noise is generated (e.g. the device with the platform component that is interfering in the Wi-Fi band), in which the device makes the AP selection process aware of the potential level of self-interference on the AP channel or channels in case of MLO. The second way is at the AP, in which the device (e.g. the device with the interfering memory) informs the AP of potential noise/interference (e.g. client device self-interference and/or the over-the-air interference) to allow the AP to pick/switch to the best channel to operate.

Using the principles and methods disclosed herein, the Wi-Fi AP selection may be improved by aggregating RF interference data on the Wi-Fi channel that APs operate in with other information such as any of RSSI, load, capability, etc. In addition, the device may be configured with an application that can collect and share the location and characteristics of interference from Platform, Client Wi-Fi and Non Wi-Fi interference (Bluetooth) data with Access Point software to optimize its channel selection. The communication with the AP can be achieved through packet exchange information defined in Standards (e.g. any of the 802.11 series promulgated by IEEE and/or through propriety protocols to AP software or to cloud based network management service providers (e.g., Ambeent, Comcast cloud, etc). In enterprises and commercial buildings, the APs are typically managed, and such communication can thus alternatively be achieved with the Access Controllers or Cloud management services.

At the current time, channel selection (e.g. selection of the best wireless channel for communication with the device) is performed by the AP, generally using Clear channel assessment / channel utilization measurements performed by the AP. Many APs come with default channels and an end-user may lack sufficient technical sophistication to pick a different channel. Anecdotally, end-users often call their Internet Service Provider (ISP) to report a performance problem, at which point the ISP may inquire about interference and change the AP operational channel. Such solutions are static and do not change based on the activity of the user and active devices. As disclosed herein, this can be improved by informing the AP of interference and having the AP dynamically change channels according to observed interference from its network (e.g., not necessarily according to just one station). Alternatively, as also disclosed herein, this can be improved by performing AP selection at the underlying device to associate to a different AP.

As an example, consider a typical home setting in which two people work from home during the day. Each person may have a laptop that actively utilizes memory/GPU, and where the operation of these components causes interference in a portion of the band (e.g. the band for communication with the AP). During these working hours, the AP may select a channel in the 5GHz band and another channel in the 2.4GHz band. However, after working hours, the family's kids may come home, which conceivably changes the Wi-Fi utilization from that of a work environment to that of a game station. Perhaps the game station is connected to an AC mains power source, and one or more people are using Bluetooth devices to listen to music. The power connection in the gaming station and the demand for better performance of the game may cause the memory to operate at a higher speed, which may result in self-interference to the Wi-Fi operation channel for the game station. Simiarly, the Bluetooth connections may generate interference in portions of the previously-utilized bands, and therefore it may be preferable for the AP to select a channel in the 6GHz band or in a different part of the 5GHz band.

Existing AP selection methods do not currently take self-interference data into consideration. For example, if a user is in airport or a shopping mall where there are several APs in the vicinity, the Wi-Fi device driver may consider the Received Signal Strength Indicator (RSSI) to select an AP in addition to checking for capability information and the AP's own load. More advanced AP selection may include backhaul bandwidth and/or some measures of latency, but not any measurement of self-interference. As mentioned above, however, a significant problem is that platform noise/interference degrades Wi-Fi performance. Although any of several difference component devices may play a role in platform interference, one of the main sources of platform interference/noise is the clock frequency of DDR and/or LPDDR memories. A conventional solution to the problem of memory-generated noise is to change a DDR/LPDDR Dynamic Voltage Frequency Scaling (DVFS) point to select a memory speed that will not interfere on a Wi-Fi channel. Adding a DVFS point or changing a DVFS point requires new memory training sequences, however, which in turn require hardware space to store them. Such efforts must be tested, validated, and tuned for each platform model. The memory training occurs during boot-time, and this calls attention to the already very stringent requirements regarding boot time and the desire to reduce boot time in such devices. Instead of altering a DVFS point, it is possible to make the Wi-Fi client aware of the dynamic noise characteristics of the platform, such as during AP selection, such that the Wi-Fi client considers to these dynamic noise characteristics in addition to other signal indicators, such as, for example, the signal to noise ratio (SNR) of the received signal in selecting a channel for the link between the device and AP. The client device may then select an AP whose channel of operation is preferable for achieving a best bandwidth and/or a best modulation and coding scheme (MCS) while lessening the impact of platform noise. Noise characteristics may be obtained through pre-production de-sense testing, such through Intel Noise Diagnostics Tool and/or through analysis of platform monitors and reports of RSSI measurement during quiet intervals. Noise characteristics are workload dependent and the Wi-Fi client considers the level of the noise depending on the workload.

The principles and methods disclosed herein may include any of : (1) selecting an AP based on the received signal characteristics as well as self-interference data; (2) determining an optimal Wi-Fi channel for an AP based on connected devices' interference characteristics; (3) utilizing information obtained from applications running different workloads (3+!) utilizing information from multiple APs regarding network load and/or interference; (4) using cloud-based intelligence or AP specific algorithms to set the optimal channel in the Access Point; or (5) dynamically optimizing AP operational channels based on varying conditions in the devices connected to the corresponding AP.

Client devices may consider any self-interference when selecting an AP to connect to and/or the channels to operate in when connected to multi-channel APs. APs currently select a best channel based on wireless interference measurements, but not taking into consideration client characteristics. One source of client-based (e.g. platform-based) interference is memory; in fact, platforms with high-speed DDR Memory can create significant interference that may result in an 8-15% degraded experience in the workload (e.g., gaming, 4K streaming, etc.). Moreover, such interference can generate ~3-5dB degradation in Wi-Fi performance. Such degradation can, however, be largely avoided by selecting a noninterfering channel (e.g. a channel in which the platform noise does not interfere). This can be achieved, for example, by negotiating with the AP to select an appropriate channel or by selecting an AP that is already using an appropriate channel. In this manner, client devices may optionally utilize de-sense information from pre-production and dynamic real-time platform noise characteristics to select the best AP as an alternative to existing methods of moving the source of interference out of Wi-Fi channel.

Currently, LPDDR5 speeds may range from 3200MT/s to 5200MT/s to other values. Resulting DDR clock harmonics may thus interfere with Wi-Fi signals. For example, a DDR Speed of 3200 MT/s may have a second harmonic of 6400MHz, which falls squarely into the Wi-Fi 6E band.

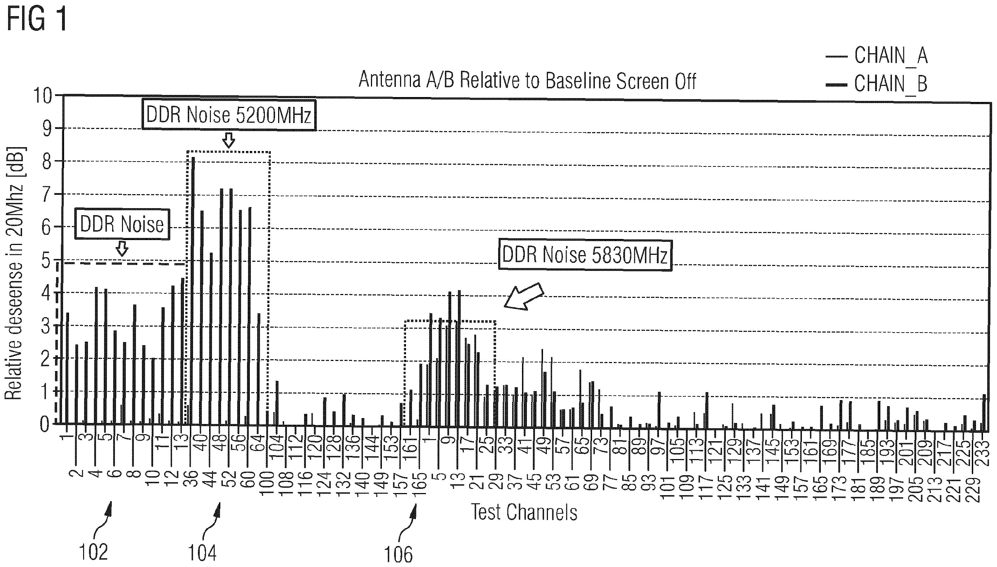

FIG. 1 depicts the impact of DDR noise on Wi-Fi channels. More specifically, the DDR memory may generate significant noise 102 in channels 1-13, corresponding to 2412MHz to 2472MHz. The DDR memory may also generate addition significant noise (e.g. based on a harmonic of the operating frequency) in the 5200MHz range, such as in channels 36-64, corresponding to 5180MHz to 5320MHz. The DDR memory may further generate still further significant noise 106 based on another harmonic of the operating frequency, in a vicinity of 5830MHz. Since the AP does not possess knowledge of the DDR-generated interferences within the client Wi-Fi device, the AP may select a channel that would be poorly suited to the device.

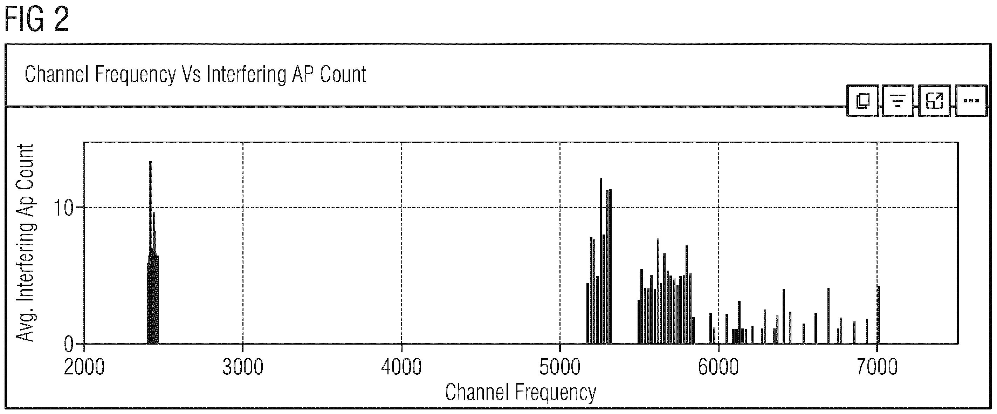

FIG. 2 depicts common AP channels that are selected in Wi-Fi. The corresponding data set arises out of a sample of approximately 27,000 devices with an active Wi-Fi connection. It can be seen that selected channels are not evenly distributed, but are rather clustered, evidencing that some channels are more commonly selected than others. Unfortunately, some of these channels may also commonly experience memory-generated interference (see, generally, FIG. 1). Thus, existing protocols may result in clusters of channel selections that ultimately may be sub-optimal for a wireless link with a particular platform, considering the noise that is generated by one or more components of that platform.

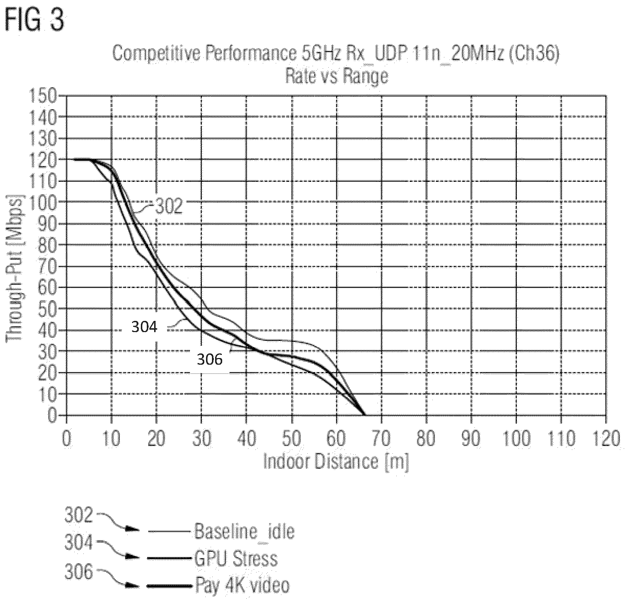

FIG. 3 depicts the impact of such interference on throughput during periods of DDR-intense workloads. A DDR-generated noise at 2400~2500MHz is assumed, at a magnitude of 3~5dB, at magnitude of 3~5dB. The resulting change in throughput is modeled based on a baseline measurement 302, a measurement with the underlying client device's (e.g. Wi-Fi device's) graphic processing unit (GPU) under stress 304, and with the underlying client device paying 4K video 306. In this figure, an analysis of rate versus range indicates that a GPU under stress 304 resulted in a degradation of throughput by approximately 15% compared to the baseline 302. Efforts to play 4K video 306 demonstrated a degradation of approximately 8% compared to the baseline 302.

Turning to offline noise measurement and/or measurement during Wi-Fi operation, the procedure as disclosed herein may include data radiofrequency (RF) noise between packets to detect non-Wi-Fi interference and interference from other Wi-Fi networks, as our AP and non-transmitting stations, but adjacent network that behave as interference are seen there, so when performing this over operational networks, it may provide good indications of the channel clearance. The client (e.g., the user device, the platform device, the device having a wireless link to the AP) may collect interference data or optionally access pre-production data collected by any additional device or peripheral. Considered alongside statistics from the DDR such as memory load and other platform components such as high-speed I/O, the device can identify interference and characterize the workload.

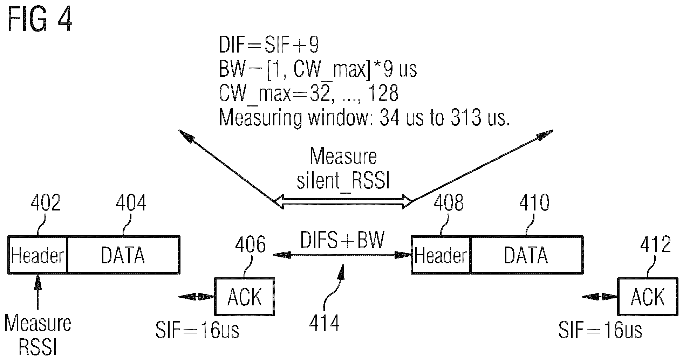

FIG. 4 depicts RF Noise measured between packets to Detect Non-Wi-Fi interference. In this figure, a first packet comprising a header 402 and a data payload 404 is transmitted, followed by an acknowledgement 406. Subsequently, a second packet comprising a header 408 and a data payload 410 is transmitted, followed by an acknowledgement 412. Of key importance is that a period of non-transmission 414 is present between the first packet and the second packet. This period of non-transmission may be understood as the quiet period and is defined by the underling IEEE 802.11 protocol. The client device (e.g. the Wi-Fi device, the device having a wireless link to the AP) may measure the signal strength (e.g. obtain a received signal strength indication (RSSI)) during this period of non-transmission 414. Because the channel should otherwise be clear during this period of non-transmission 414, any noise detected may be reasonably attributable to memory (or other platform components)-generated interference and/or non-Wi-Fi interference over the air.

In the following, a procedure for selection of the operation channel at the AP will be discussed. The client may report detected interference along with any other relevant data such as memory load, level of interference, or a recommended channel to the AP. This communication may take place via an information element (IE) or via the cloud. The skilled person will appreciate that an IE may refer to a field or item such as in a Q.931 or Q.2921 message under IEEE 802.11 or in the context of an IEEE 802.11 management frame or other frame types. The AP may analyze this data and consider the received request to select a preferred frequency.

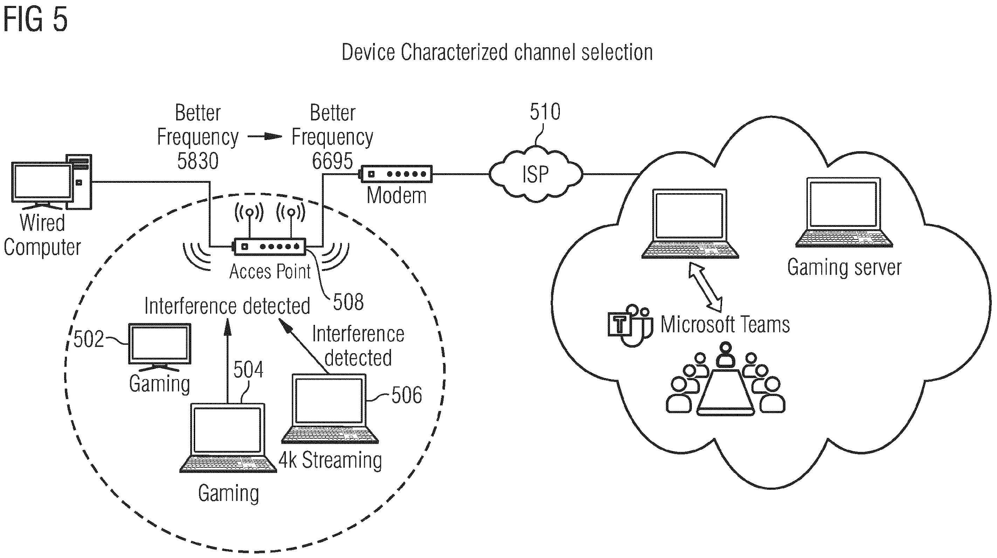

FIG. 5 depicts aggregated knowledge within the context of a Cloud/the Wi-Fi IE. That is, as an alternative to the preferred channel being negotiated between a client-device (e.g. a Wi-Fi device) and the AP directly, the preferred channel may be determined at a higher-level unit that has access to information from multiple APs and/or multiple clients. This higher-level unit may take into consideration client-device-specific factors such as any of applications running, latency demands, GPU stress, or detected interference. For example, and in this figure, a first client-device 502, a second client-device 504, and a third client-device 506 are wirelessly connected to an AP 508. The client-devices may each be assumed to have some amount of memory-generated interference on one or more channels. A cloud server 510 (depicted herein as an internet service provider (ISP) but could be any other cloud-based server having a connection to the AP 508, such as a proprietary server / server in connection with the AP's manufacturer) has access to the information reported from the client-devices (see 502, 504, and 506) such as interference levels and/or channels, GPU stress, latency tolerance, etc. The cloud server 510 (for example, in the case of an ISP) may optionally also have information about the data streams received or sent by the various client-devices (e.g. such as streaming data sent to the devices). The could server 510 may accordingly be in a position to select an operating channel for the AP to serve one or more of the client-devices, rather than leaving this decision to the AP 508.

The principles and methods disclosed herein may be performed using a proprietary communication protocol, or may be performed, as stated above, using an IE, such as in the relevant Wi-Fi standards. In the following, and without loss of generality, an example of such IE and information fields to carry the level of interference or recommended channel is provided. The example information fields can be sent from other APs with even additional information elements or can be sent from non-AP stations, even when not all the information fields are present.

In this non-limiting example, the client shares the relevant data with an AP that carries a Vendor Specific IE in the Beacon/Probe-Response Frames. The client may send a Channel Interference IE inside a Vendor Specific Protected Action-Frame with, for example, the following fields:

| | | | | |
|---|---|---|---|---|
| Channel | Number of APs | Number of Clients | Channel Load | Channel interference |
| | | | (Wi-Fi interference) | (Non Wi-Fi interference from platform noise or non Wi-Fi external noise) |

Obviously, the particular structure of the communication packet is flexible and may be deviate from the above example, such as depending on the particular protocol used, whether the communication is part of a propriety protocol or a Wi-Fi packet, or otherwise. The IE may be added periodically or when interference is detected. It may include channel scoring information, such as based on the device interference characteristics (e.g based on platform interference, Non-Wi-Fi interference, etc.).

Each Line may represent an IE from one client. The AP may combine these data.

| Channel | STA ID | Number of APs | Number of Clients | Channel Load | Device Score | TID |
|---|---|---|---|---|---|---|
| 1 | 1 | 2 | 10 | 30% | 85 | VO/VI |
| 1 | 2 | 5 | 10 | 30% | 80 | BE |
| 1 | 3 | 2 | 10 | 10% | 50 | BK |

In the following table, the AP combines the Channel Data so as to make a best decision as to the channel for communication (e.g. for a channel not interfered with by the platform-generated noise.

| Channel | Ap Channel Score | Device Channel Score (Avg) | Total Channel Score |
|---|---|---|---|
| 1 | 80 | 90 | 85 |
| 6 | 70 | 80 | 75 |
| 11 | 70 | 80 | 75 |

That is, the AP may use the information received from the client device or devices to generate a ranking of the channel options for the wireless link with one or more of the devices. In this manner, the AP may select a preferable channel for the device.

Further, considering the fact that changing the operating channel can impact certain real-time applications that may have strict timing requirements (e.g. low latency tolerances), application information (e.g. information from the latency intolerant application) may be optionally used or considered. This can be achieved by the client device adding a data priority level (e.g. a traffic priority) to the IE, or the AP may detect a priority based on, for example, traffic specifications (TSpec) during admission control. The AP can decide to perform either band steering or channel steering for a client, or to perform a new channel selection.

Alternatively or additionally, the interference and workload data described above can be utilized for AP selection (e.g. rather than channel selection). That is, upon the Wi-Fi device (e.g., the user device) detecting interference to the existing AP channel, the Wi-Fi device may trigger an Advanced AP Selection Algorithm. This Advanced AP Selection Algorithm may select an alternative AP (e.g., may decide to switch to a different AP). This Advanced AP Selection Algorithm may be configured in various ways, depending on the implementation. However, one potential manner in which this Advanced AP Selection Algorithm may be structured is as follows:

First, the algorithm may consider a pre-defined, but configurable, window of time during which the client device may accumulate data, which will be referred to herein as Tw. This may be, for example, the quiet period or the period of AP non-transmission. The algorithm may further consider channel state information and/or channel estimates accumulated during Tw from the current AP, as well as channel state information and/or channel estimates from the potential candidate AP (e.g. as obtained during scanning). The algorithm may further consider the frequency-selectivity of the known self-interference, given the current work-load and the past workload during Tw. The algorithm may further consider the average wide-band SNR during Tw of the current and candidate AP(s).

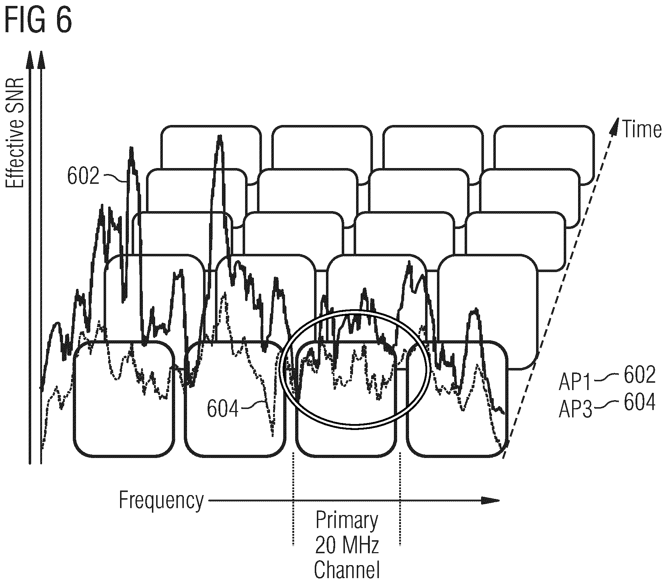

Given the foregoing, the Wi-Fi device, using the algorithm, may then calculate an effective SNR with the granularity of the supported Resource Unit (RU). FIG. 6 depicts an exemplary effective SNR for use in the Advanced AP Selection Algorithm. The Wi-Fi device may further estimate a best operating Modulation Coding Scheme (MCS) for each resource unit (RU) size, given the effective SNR, and then compare it with the MCS levels that are successfully received from the current AP during Tw. If the new candidate AP has a higher effective SNR, which thus allows it to operate at a higher MCS level, then the Wi-Fi device may roam to the new AP. In FIG. 6, the first AP (AP1) 602 has a higher effective SNR than the second AP (AP2) 604, even though the primary channel in which beacons are received has a similar SNR, but considering the wider bandwidth, the red allows for a greater MCS. For ease of comparison, the effective SNRs of AP1 602 and AP2 604 are overlaid, although in a real scenario, their channels of operation may occupy different regions of the frequency band.

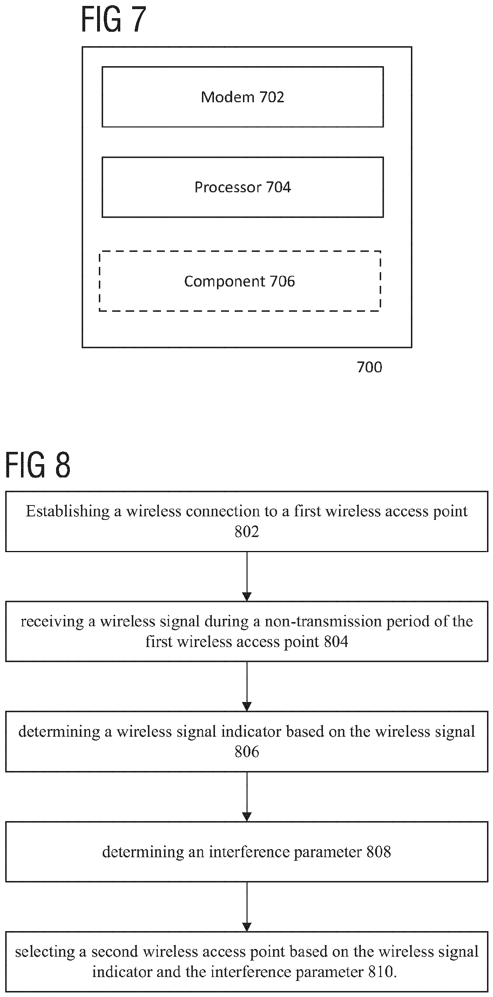

FIG. 7 depicts a client device 700 for AP selection. The device includes a modem 702 and a processor 704. The processor 704 may be configured to cause the modem 702 to establish a wireless connection to a first wireless AP (not depicted). This may be, for example, a Wi-Fi connection according to any of the IEE 802.11 series. The processor 704 may be configured to cause the modem to receive a wireless signal during a non-transmission period of the first wireless AP and/or the modem 704 may be configured to receive the wireless signal during the non-transmission period. The processor 704 may be configured to determine a wireless signal indicator based on the wireless signal. The wireless signal indicator may be or include channel state information (CSI) or a channel estimate of a channel in use by the second wireless access point. That is, the device may listen during the quiet time of the first AP, thereby allowing the device to determine CSI of a channel in use by a second AP. The CSI may indicate how a signal propagates from the second AP to the client device and may represent the combined effect of, any of scattering, fading, or power decay. The processor 704 may be further configured to determine the channel state information or the channel estimate of the channel in use by the second wireless access point based on the wireless signal.

The wireless signal indicator may be a measurement of a signal strength received at the client device. In this manner, the wireless signal indicator may be, for example, a received signal strength indicator (RSSI), although it is conceivable to use any other quantifier of a signal detected at the client device during the quiet period. The device ddetermining the wireless signal indicator may include determining an average wide-band signal to noise ratio of at least one wireless AP (e.g., the second AP) other than the first wireless AP. Selecting the second wireless AP may include selecting a wireless AP of the at least one wireless AP other than the first wireless AP as a wireless AP having a greatest wide-band signal-to-noise ratio. It should be noted that the signal-to-noise ratio may refer to a ratio of received signals from the AP to platform generated noise. In some circumstances, it may be useful to calculate a signal-to-noise ratio that compares the platform generated noise (e.g. platform generated interference) to noise originating externally to the platform. In other situations, it may be desirable to compare the incoming signal(s) with platform-generated noise and noise originating externally to the platform. In some circumstances, the wireless signal indicator my include a plurality of factors or wireless signal indicators. Examples of such wireless signal indicators may include any of received signal strength, the load on an AP, of capabilities of the AP.

The processor 704 may determine an interference parameter and select a second wireless AP based on the wireless signal indicator and the interference parameter. In this manner, the processor may be optionally configured to cause the modem to discontinue the wireless connection to the first wireless access point and to establish a wireless connection to the second wireless access point. Selecting the second wireless access point may include selecting a wireless access point transmitting in a wireless channel that is less interfered with by the interference signal than a wireless channel in which the first wireless access point is transmitting. That is, the second AP may operate in a channel / in a range of frequencies that are less interfered with by a platform generated noise of the client device than the channel / range of frequencies of the first AP.

The determining of the interference parameter may include determining an interference signal induced by the computing platform (e.g., the computing platform of which the device is a part, the client device). As described throughout, one or more components 706 (note the dashed lines in FIG. 7 around 706, indicating that it may not necessarily be claimed as part of the underlying device) of the computing platform may include an interference signal (e.g. whether their fundamental frequency or a harmonic of their fundamental frequency). Determining the interference parameter may include determining a frequency of this interference that is induced by the component of the computing platform. As stated, the frequency of the interference signal may be a harmonic of an operating frequency of the component of the computing platform. As a non-limiting example, certain memories may operate in a frequency range, a harmonic of which may interfere with one or more Wi-Fi bands. The processor 704 may be configured to determine a bandwidth and a strength of the interference signal from the wireless signal and/or determine the frequency of the interference signal from a known operating frequency of the memory.

The determination of the interference signal may be performed in a variety of ways. In each option, the device listens during a quiet time (e.g. a non-transmission time of the first AP). The device will detect noise / a signal at one or more frequencies. In a first option, it would be conceivable for the device to assume that the signal or signals detected during the quiet time corresponds in part or in whole to platform generated noise. Doing so, however, without additional information, would potentially render the device unable to distinguish between a transmission of the second AP and the device's own platform generated noise. This could result in the device falsely attributing a signal of the second AP to platform generated noise, which may be undesirable.

Instead, and in a second option, the device may utilize preexisting data about the platform and its own platform induced noise when determining noise (e.g. the interference parameter) and the wireless signal indicator from the signal received during the quiet time. This may be or include, for example, noise characterization data, which may represent platform noise generated by a computing platform of the device at a plurality of workloads. The processor may be configured to utilize the noise characterization data to identify platform generated noise received during the non-transmission period of the first AP and/or to distinguish between such platform-generated noise and a transmission of the second AP.

The noise characterization data may include one or more frequencies of platform generated noise and optionally signal strengths of the one or more frequencies of platform generated noise. In another configuration, the noise characterization data may associate the one or more frequencies of platform generated noise (and optionally the signal strength of this platform generated noise) with a workload of a plurality of workloads. This may correspond to the fact that platform components (e.g. memories) may generate interference at differing frequencies and/or signal strengths based on a given workload (e.g. whether running only background computational tasks, browsing the web, or engaging in low-latency tasks such as playing a video game, holding a voice call, holding a video conference, etc.). The noise characterization data may include a workload characterization (e.g. low-latency vs. high-latency; tasks such as browsing, streaming, or the like; percent or magnitude of processor resources utilized; memory clock speed; or any other metric), a corresponding frequency or frequencies in which interference is generated at the platform level, and optionally a magnitude or signal strength of this interference. This noise characterization data may be stored in a look-up table or in any other desired format. The noise characterization data may, for example, optionally be data that were measured at or prior to manufacture, such as a data that are stored in a device firmware. In light of the foregoing, the processor may be configured to select the second wireless AP based on the wireless signal indicator, the interference parameter, and the noise characterization data.

Alternatively or additionally to the device above, which is configured to select a second AP based on the previously-described factors, the device may be configured to remain with the first AP, but to provide information to the wireless AP for selection of a new channel for communication with the first AP. In this manner, the device 700 may include a modem 702 and a processor 704. The processor 704 may be configured to cause the modem 702 to connect to the wireless AP (e.g. the first wireless AP); receive a first wireless signal during a non-transmission period of the wireless access point; determine an interference parameter based on the first wireless signal; and send a second wireless signal representing the interference parameter to the wireless access point.

As with the previous configuration described above, the first wireless signal may include an interference signal, and therefore determining the interference parameter based on the first wireless signal may include determining one or more frequencies of the interference signal.

As also with the first configuration, the modem and the processor may be configured as part of a computing platform, and the interference signal may be induced by a component of the computing platform. This component of the computing platform may optionally be a memory, although computing platforms may have several components (memory and/or non-memory components) that can induce such interference.

The interference parameter comprises a signal strength of the interference signal. The interference signal may be the operating frequency of the component and/or the interference signal may be a harmonic of an operating frequency of the component.

The interference parameter may include a frequency or range of frequencies for wireless communication that are less subject to interference from an interference signal than a frequency of a signal received from the wireless access point. In this manner, the processor may be configured to generate a rating of one or more channels for wireless communication based on the first wireless signal. The interference parameter may thus include the rating of the one or more channels for wireless communication.

As an alternative, rather than the processor being configured to send the second wireless signal representing the interference parameter to the wireless access point, the processor may be configured to send the second wireless signal to a higher-level device than the AP. For example, the processor may be configured to send the signal using an application-level exchange with an AP vender. In this manner, the transfer of this information may assist an AP manager to configure APs or to assist APs in their own channel selection algorithms. This may include, for example, using a channel based on users' interference characteristics by utilizing per platform-specific workload/interference. That is, a device may utilize accumulated info from multiple active devices to identify an preferred AP or a preferred channel for the AP. The technology may take at least any of the following into consideration: device power consumption, power source, workload, or internal platform interference coming from high-speed memory, IOs or other components of the platform whose operation, the clock, or harmonics of said operation or clock frequencies fall within Wi-Fi (or other wireless technology) channel.

FIG. 8 depicts a method of access point (AP) selection. The method includes establishing a wireless connection to a first wireless access point 802; receiving a wireless signal during a non-transmission period of the first wireless access point 804; determining a wireless signal indicator based on the wireless signal 806; determining an interference parameter 808; and selecting a second wireless access point based on the wireless signal indicator and the interference parameter 810.

Any aspect of this disclosure described as being performed by a device or a method may alterantive be performing with a non-transitory computer readable medium, comprising instructions which, if executed by a processor, cause the processor to perform the elements described as attributable to the device or the method. For example, the instructions may be configured to cause the processor to establish a wireless connection to a first wireless access point; receive a wireless signal during a non-transmission period of the first wireless access point; determine a wireless signal indicator based on the wireless signal; determine an interference parameter; and select a second wireless access point based on the wireless signal indicator and the interference parameter.

The device may select and AP or even select a prospective channel for communication with an AP by using the knowledge of its workload. Alternatively or additionally, the device may balance platform/memory performance relative to wireless performance. For example, if a user of the device were to run a memory intensive activity (e.g. low-latency video game) while checking emails in the background at a lower rate (e.g. a slower memory rate), then preference should be given to memory performance (this assumes that the video game is not operating wirelessly / over a wireless channel, and that Wi-Fi use is limited to checking emails). This can be achieved by selecting an optimized memory frequency such that interference with wireless communications would be tolerable for checking emails. Alternatively, if wireless performance for an online gaming is important, then to avoid interference with wireless communications, a different AP (e.g. an AP on a different channel that is not affected by the interference coming from the component or memory) is selected or a different channel, even if that channel otherwise has lower capabilities, compared to a prior or current channel. That is, if, all things being equal, a first channel inherently has greater capabilities than a second channel, it may still be beneficial for the device to switch or seek to switch to the second channel, if the first channel is interfered with by component interference, but the second channel is not. In another example, if a high wireless rate and reliability are demanded (e.g., such as when downloading video data), then the device should consider the wireless demand when selecting the AP. The device may optionally also even restrict the memory frequency.

Further aspects of the disclosure will be provided by way of example:

In Example 1, a device comprising a modem; and a processor, configured to cause the modem to establish a wireless connection to a first wireless access point; receive a wireless signal during a non-transmission period of the first wireless access point; determine a wireless signal indicator based on the wireless signal; determine an interference parameter; and select a second wireless access point based on the wireless signal indicator and the interference parameter.

In Example 2, the device of Example 1, wherein the processor is further configured to cause the modem to discontinue the wireless connection to the first wireless access point and to establish a wireless connection to the second wireless access point.

In Example 3, the device of Example 1 or 2, wherein the wireless signal indicator comprises channel state information or a channel estimate of a channel in use by the second wireless access point.

In Example 4, the device of Example 3, wherein the processor is further configured to determine the channel state information or the channel estimate of the channel in use by the second wireless access point based on the wireless signal.

In Example 5, the device of any one of Examples 1 to 4, wherein the modem and the processor are configured as part of a computing platform, and wherein determining the interference parameter comprises determining an interference signal induced by the computing platform.

In Example 6, the device of Example 5, wherein determining the interference parameter comprises determining a frequency of an interference signal induced by a component of the computing platform.

In Example 7, the device of Example 6, wherein the frequency of the interference signal is a harmonic of an operating frequency of the component of the computing platform.

In Example 8, the device of Example 6 or 7, wherein the component is a memory of the computing platform.

In Example 9, the device of any one of Examples 5 to 8, wherein the device is configured to determine a bandwidth and a strength of the interference signal from the wireless signal.

In Example 10, the device of any one of Examples 8 to 9, wherein the device is configured to determine the frequency of the interference signal from a known operating frequency of the memory.

In Example 11, the device of any one of Examples 6 to 10, wherein selecting the second wireless access point comprises selecting a wireless access point transmitting in a wireless channel that is less interfered with by the interference signal than a wireless channel in which the first wireless access point is transmitting.

In Example 12, the device of any one of Examples 6 to 11, wherein determining the wireless signal indicator comprises determining an average wide-band signal to noise ratio of at least one wireless access point other than the first wireless access point; and wherein selecting the second wireless access point comprises selecting a wireless access point of the at least one wireless access point other than the first wireless access point as a wireless access point having a greatest wide-band signal-to-noise ratio.

In Example 13, the device of any one of Examples 1 to 12, further comprising noise characterization data, representing platform noise generated by a computing platform of the device at a plurality of workloads; wherein the processor is configured to select the second wireless access point based on the wireless signal indicator, the interference parameter, and the noise characterization data.

In Example 14, the device of Example 13, wherein the noise characterization data comprise noise and frequency of noise generated by one or more components of the computing platform at each of the plurality of workloads.

In Example 15, a device comprising a modem; and a processor, configured to cause the modem to connect to a wireless access point; receive a first wireless signal during a non-transmission period of the wireless access point; determine an interference parameter based on the first wireless signal; and send a second wireless signal representing the interference parameter to the wireless access point.

In Example 16, the device of Example 15, wherein the first wireless signal comprises an interference signal; and wherein determining the interference parameter based on the first wireless signal comprises determining one or more frequencies of the interference signal.

In Example 17, the device of Example 16, wherein the modem and the processor are configured as part of a computing platform; and wherein the interference signal is induced by a component of the computing platform.

In Example 18, the device of Example 17, wherein the component of the computing platform is a memory.

In Example 19, the device of Example 17 or 18, wherein the interference parameter comprises a signal strength of the interference signal.

In Example 20, the device of Example 19, wherein the interference signal is a harmonic of an operating frequency of the component of the computing platform.

In Example 21, the device of any one of Examples 16 to 20, wherein the interference parameter comprises a frequency or range of frequencies for wireless communication that are less subject to interference from an interference signal than a frequency of a signal received from the wireless access point.

In Example 22, the device of any one of Examples 15 to 21, wherein the processor is configured to generate a rating of one or more channels for wireless communication based on the first wireless signal, and wherein the interference parameter comprises the rating of the one or more channels for wireless communication.

In Example 23, a method of access point (AP) selection comprising establishing a wireless connection to a first wireless access point; receiving a wireless signal during a non-transmission period of the first wireless access point; determining a wireless signal indicator based on the wireless signal; determining an interference parameter; and selecting a second wireless access point based on the wireless signal indicator and the interference parameter.

In Example 24, the method of AP selection of Example 23, further comprising discontinuing the wireless connection to the first wireless access point and establishing a wireless connection to the second wireless access point.

In Example 25, the method of AP selection of Example 23 or 24, wherein the wireless signal indicator comprises channel state information or a channel estimate of a channel in use by the second wireless access point.

In Example 26, the method of AP selection of Example 25, further comprising determining the channel state information or the channel estimate of the channel in use by the second wireless access point based on the wireless signal.

In Example 27, the method of AP selection of any one of Examples 23 to 26, wherein determining the interference parameter comprises determining an interference signal induced by a computing platform.

In Example 28, the method of AP selection of Example 27, wherein determining the interference parameter comprises determining a frequency of an interference signal induced by a component of the computing platform.

In Example 29, the method of AP selection of Example 28, wherein the frequency of the interference signal is a harmonic of an operating frequency of the component of the computing platform.

In Example 30, the method of AP selection of Example 28 or 29, wherein the component is a memory of the computing platform.

In Example 31, the method of AP selection of any one of Examples 27 to 30, further comprising determining a bandwidth and a strength of the interference signal from the wireless signal.

In Example 32, the method of AP selection of any one of Examples 30 to 31, further comprising determining the frequency of the interference signal from a known operating frequency of the memory.

In Example 33, the method of AP selection of any one of Examples 28 to 32, wherein selecting the second wireless access point comprises selecting a wireless access point transmitting in a wireless channel that is less interfered with by the interference signal than a wireless channel in which the first wireless access point is transmitting.

In Example 34, the method of AP selection of any one of Examples 28 to 33, wherein determining the wireless signal indicator comprises determining an average wide-band signal to noise ratio of at least one wireless access point other than the first wireless access point; and wherein selecting the second wireless access point comprises selecting a wireless access point of the at least one wireless access point other than the first wireless access point as a wireless access point having a greatest wide-band signal-to-noise ratio.

In Example 35, the method of AP selection of any one of Examples 23 to 34, further comprising noise characterization data, representing platform noise generated by a computing platform at a plurality of workloads; further comprising selecting the second wireless access point based on the wireless signal indicator, the interference parameter, and the noise characterization data.

In Example 36, the method of AP selection of Example 35, wherein the noise characterization data comprise noise and frequency of noise generated by one or more components of the computing platform at each of the plurality of workloads.

In Example 37, a method of channel selection comprising connecting to a wireless access point; receiving a first wireless signal during a non-transmission period of the wireless access point; determining an interference parameter based on the first wireless signal; and sending a second wireless signal representing the interference parameter to the wireless access point.

In Example 38, the method of channel selection of Example 37, wherein the first wireless signal comprises an interference signal; and wherein determining the interference parameter based on the first wireless signal comprises determining one or more frequencies of the interference signal.

In Example 39, the method of channel selection of Example 38, wherein the interference signal is induced by a component of a computing platform.

In Example 40, the method of channel selection of Example 39, wherein the component of the computing platform is a memory.

In Example 41, the method of channel selection of Example 39 or 40, wherein the interference parameter comprises a signal strength of the interference signal.

In Example 42, the method of channel selection of Example 41, wherein the interference signal is a harmonic of an operating frequency of the component of the computing platform.

In Example 43, the method of channel selection of any one of Examples 38 to 42, wherein the interference parameter comprises a frequency or range of frequencies for wireless communication that are less subject to interference from an interference signal than a frequency of a signal received from the wireless access point.

In Example 44, the method of channel selection of any one of Examples 37 to 43, further comprising generating a rating of one or more channels for wireless communication based on the first wireless signal, and wherein the interference parameter comprises the rating of the one or more channels for wireless communication.

In Example 45, a non-transitory computer readable medium, comprising instructions which, if executed by a processor, cause the processor to establish a wireless connection to a first wireless access point; receive a wireless signal during a non-transmission period of the first wireless access point; determine a wireless signal indicator based on the wireless signal; determine an interference parameter; and select a second wireless access point based on the wireless signal indicator and the interference parameter.

In Example 46, the non-transitory computer readable medium of Example 45, wherein the instructions are further configured to cause the processor to discontinue the wireless connection to the first wireless access point and establish a wireless connection to the second wireless access point.

In Example 47, the non-transitory computer readable medium of Example 45 or 46, wherein the wireless signal indicator comprises channel state information or a channel estimate of a channel in use by the second wireless access point.

In Example 48, the non-transitory computer readable medium of Example 47, wherein the instructions are further configured to cause the processor to determine the channel state information or the channel estimate of the channel in use by the second wireless access point based on the wireless signal.

In Example 49, the non-transitory computer readable medium of any one of Examples 45 to 48, wherein determining the interference parameter comprises determining an interference signal induced by a computing platform.

In Example 50, the non-transitory computer readable medium of Example 49, wherein determining the interference parameter comprises determining a frequency of an interference signal induced by a component of the computing platform.

In Example 51, the non-transitory computer readable medium of Example 50, wherein the frequency of the interference signal is a harmonic of an operating frequency of the component of the computing platform.

In Example 52, the non-transitory computer readable medium of Example 50 or 51, wherein the component is a memory of the computing platform.

In Example 53, the non-transitory computer readable medium of any one of Examples 49 to 52, wherein the instructions are further configured to cause the processor to determine a bandwidth and a strength of the interference signal from the wireless signal.

In Example 54, the non-transitory computer readable medium of any one of Examples 52 to 53, wherein the instructions are further configured to cause the processor to determine the frequency of the interference signal from a known operating frequency of the memory.

In Example 55, the non-transitory computer readable medium of any one of Examples 50 to 54, wherein selecting the second wireless access point comprises selecting a wireless access point transmitting in a wireless channel that is less interfered with by the interference signal than a wireless channel in which the first wireless access point is transmitting.

In Example 56, the non-transitory computer readable medium of any one of Examples 50 to 55, wherein determining the wireless signal indicator comprises determining an average wide-band signal to noise ratio of at least one wireless access point other than the first wireless access point; and wherein selecting the second wireless access point comprises selecting a wireless access point of the at least one wireless access point other than the first wireless access point as a wireless access point having a greatest wide-band signal-to-noise ratio.

In Example 57, the non-transitory computer readable medium of any one of Examples 45 to 56, further comprising noise characterization data, representing platform noise generated by a computing platform at a plurality of workloads; wherein the instructions are further configured to cause the processor to select the second wireless access point based on the wireless signal indicator, the interference parameter, and the noise characterization data.

In Example 58, the non-transitory computer readable medium of Example 57, wherein the noise characterization data comprise noise and frequency of noise generated by one or more components of the computing platform at each of the plurality of workloads.

In Example 59, a non-transitory computer readable medium, comprising instructions which, if executed by a processor, cause the processor to: connecting to a wireless access point; receiving a first wireless signal during a non-transmission period of the wireless access point; determining an interference parameter based on the first wireless signal; and sending a second wireless signal representing the interference parameter to the wireless access point.

In Example 60, the non-transitory computer readable medium of Example 59, wherein the first wireless signal comprises an interference signal; and wherein determining the interference parameter based on the first wireless signal comprises determining one or more frequencies of the interference signal.

In Example 61, the non-transitory computer readable medium of Example 60, wherein the processor is configured as part of a computing platform; and wherein the interference signal is induced by a component of the computing platform.

In Example 62, the non-transitory computer readable medium of Example 61, wherein the component of the computing platform is a memory.

In Example 63, the non-transitory computer readable medium of Example 61 or 62, wherein the interference parameter comprises a signal strength of the interference signal.

In Example 64, the non-transitory computer readable medium of Example 63, wherein the interference signal is a harmonic of an operating frequency of the component of the computing platform.

In Example 65, the non-transitory computer readable medium of any one of Examples 60 to 64, wherein the interference parameter comprises a frequency or range of frequencies for wireless communication that are less subject to interference from an interference signal than a frequency of a signal received from the wireless access point.

In Example 66, the non-transitory computer readable medium of any one of Examples 59 to 65, wherein the instructions are further configured to cause the processor to generate a rating of one or more channels for wireless communication based on the first wireless signal, and wherein the interference parameter comprises the rating of the one or more channels for wireless communication.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A device comprising:
a modem; and
a processor, configured to cause the modem to:
establish a wireless connection to a first wireless access point;
receive a wireless signal during a non-transmission period of the first wireless access point;
determine a wireless signal indicator based on the wireless signal;
determine an interference parameter;
determine if the wireless connection to the first wireless access point is to be switched to a second wireless access point based on the wireless signal indicator and the interference parameter; and
select a second wireless access point if the switching is indicated.

2. The device of claim 1, wherein the processor is further configured to cause the modem to discontinue the wireless connection to the first wireless access point and to establish a wireless connection to the second wireless access point.

3. The device of any one of claims 1 or 2, wherein the wireless signal indicator comprises channel state information or a channel estimate of a channel in use by the second wireless access point, and wherein the processor is further configured to determine the channel state information or the channel estimate of the channel in use by the second wireless access point based on the wireless signal.

4. The device of any one of claims 1 to 3, wherein the modem and the processor are configured as part of a computing platform, and wherein determining the interference parameter comprises determining an interference signal induced by a component of the computing platform;

5. The device of claim 4, wherein a frequency of the interference signal is a harmonic of an operating frequency of the component of the computing platform.

6. The device of any one of claims 4 or 5, wherein the component is a memory of the computing platform.

7. The device of any one of claims 4 to 6, wherein the device is configured to determine a bandwidth and a strength of the interference signal from the wireless signal, or wherein the device is configured to determine the frequency of the interference signal from a known operating frequency of the memory.

8. The device of any one of claims 1 to 7, wherein selecting the second wireless access point comprises selecting a wireless access point transmitting in a wireless channel that is less interfered with by the interference signal than a wireless channel in which the first wireless access point is transmitting.

9. The device of any one of claims 1 to 8, wherein determining the wireless signal indicator comprises determining an average wide-band signal to noise ratio of at least one wireless access point other than the first wireless access point; and wherein selecting the second wireless access point comprises selecting a wireless access point of the at least one wireless access point other than the first wireless access point as a wireless access point having a greatest wide-band signal-to-noise ratio.

10. The device of any one of claims 1 to 9, further comprising noise characterization data, representing platform noise generated by a computing platform of the device at a plurality of workloads; wherein the processor is configured to select the second wireless access point based on the wireless signal indicator, the interference parameter, and the noise characterization data.

11. The device of claim 10, wherein the noise characterization data comprise noise and frequency of noise generated by one or more components of the computing platform at each of the plurality of workloads.

12. A non-transitory computer readable medium, comprising instructions which, if executed by a processor, cause the processor to:
establish a wireless connection to a first wireless access point;
receive a wireless signal during a non-transmission period of the first wireless access point;
determine a wireless signal indicator based on the wireless signal;
determine an interference parameter;
determine if the wireless connection to the first wireless access point is to be switched to a second wireless access point based on the wireless signal indicator and the interference parameter; and
select a second wireless access point if the switching is indicated.

13. The non-transitory computer readable medium of claim 12, wherein determining the interference parameter comprises determining an interference signal induced by a computing platform.

14. The non-transitory computer readable medium of any one of claims 12 or 13, wherein selecting the second wireless access point comprises selecting a wireless access point transmitting in a wireless channel that is less interfered with by the interference signal than a wireless channel in which the first wireless access point is transmitting.

15. The non-transitory computer readable medium of any one of claims 12 to 14, wherein determining the wireless signal indicator comprises determining an average wide-band signal to noise ratio of at least one wireless access point other than the first wireless access point; and wherein selecting the second wireless access point comprises selecting a wireless access point of the at least one wireless access point other than the first wireless access point as a wireless access point having a greatest wide-band signal-to-noise ratio.
